# EUROPEAN PATENT APPLICATION

(11) **EP 4 407 264 A1**
(43) Date of publication of application: **31.07.2024**
(21) Application number: 22872144.5
(22) Date of filing: 23.09.2022
(51) Int. Cl.: F25D 23/12, A47J 31/40

(54) **SPARKLING WATER MIXING ASSEMBLY AND REFRIGERATOR HAVING SAME**

(30) Priority: 26.09.2021 CN 202111131049
(71) Applicant: Qingdao Haier Refrigerator Co., Ltd., Laoshan District Qingdao Shandong 266101 (CN); Haier Smart Home Co., Ltd., Qingdao, Shandong 266101 (CN)
(72) Inventor: LYU, Peng, Qingdao, Shandong 266101 (CN); ZHANG, Hao, Qingdao, Shandong 266101 (CN); ZHAO, Xiaojun, Qingdao, Shandong 266101 (CN); WANG, Yi, Qingdao, Shandong 266101 (CN); JI, Xuan, Qingdao, Shandong 266101 (CN)
(74) Representative: Winter, Brandl - Partnerschaft mbB
(86) International application number: PCT/CN2022/121010
(87) International publication number: WO 2023/046100

(57) **Abstract**

A sparkling water mixing assembly and a refrigerator having same. The sparkling water mixing assembly comprises a supply module, a mixing container, and a mixing connector. The supply module is configured to supply carbon dioxide. The mixing container is configured to contain a liquid to be mixed, and has an opening. The mixing connector is configured to enable the mixing container to be detachably disposed thereon. The mixing connector has a mixing chamber, a pressure channel, and an obtaining channel. The mixing chamber allows the opening to extend into the mixing chamber. The pressure channel is communicated with the mixing chamber, and is configured to adjust the pressure in the mixing chamber. The obtaining channel is communicated with the mixing chamber and the supply module, and is configured to enable the mixing container to obtain carbon dioxide. The mixing connector of the sparkling water mixing assembly has the pressure channel, and the pressure channel facilitates preparation of sparkling water having different concentrations and facilitates disassembly of the mixing container. The mixing connector improves the universality of the mixing container, and the mixing container is disposed on the mixing connector, i.e., having the capabilities of being adjusted in terms of pressure and obtaining carbon dioxide.

## Description

### TECHNICAL FIELD

The present application relates to a refrigerator, and in particular, to a sparkling water mixing assembly and a refrigerator having the same.

### BACKGROUND

Since a frozen sparkling drink is widely liked by people, a refrigerator capable of preparing sparkling water emerges. Currently, cold water stored in the refrigerator is mostly adopted for preparing the sparkling water in the refrigerator, and the sparkling water is output after prepared in a mixing container. This way of preparing the sparkling water in the refrigerator has many defects, types of the sparkling water are limited, and bacteria, or the like, are prone to breed when the mixing container is not cleaned for a long time.

### SUMMARY

An object of the present application is to provide a sparkling water mixing assembly and a refrigerator having the same, so as to solve the above technical problems.

Particularly, the present application provides a sparkling water mixing assembly, comprising:
a supply module configured to supply carbon dioxide;
a mixing container configured to contain to-be-mixed liquid and having an opening; and
a mixing connector configured to detachably provide the mixing container, wherein the mixing connector comprises:
   a mixing cavity, the opening extending into the mixing cavity;
   a pressure channel communicated with the mixing cavity and configured to adjust a pressure in the mixing cavity; and
   an accessing channel communicated with the mixing cavity and the supply module and configured to allow the mixing container to acquire the carbon dioxide.

Optionally, the sparkling water mixing assembly further comprising:
a three-way valve having a first port communicated with the pressure channel;
a pressure relief switch communicated with a second port of the three-way valve, such that the mixing container mounted on the mixing connector is communicated with the pressure relief switch, and when the pressure relief switch is opened, the mixing container is communicated with the environment to facilitate disassembly of the mixing container;
a pressure adjustment assembly communicated with a third port of the three-way valve, such that the mixing container mounted on the mixing connector is communicated with the pressure adjustment assembly for adjusting the pressure within the mixing container.

Optionally, wherein the pressure adjustment assembly comprises:
a connection channel providing a first end communicated with the third port of the three-way valve, and a side wall having an exhaust portion communicated with the atmosphere; and
a pressing block located in one end of the connection channel and configured to block the exhaust portion and a first end of the connection channel, a pressure of the pressing block being adjustable to adjust the pressure in the mixing container.

Optionally, wherein a second end of the connection channel has an internal thread;
the pressure adjustment assembly further comprises:
a knob having an external thread and configured to be sleeved with the second end of the connection channel and be in threaded fit with the second end of the connection channel; and
a spring provided between the knob and the pressing block, the knob being configured to be rotated to apply different pressures to the pressing block.

Optionally, further comprising:
a safety assembly communicated with the mixing cavity, such that the mixing container mounted on the mixing connector is communicated with the safety assembly to ensure that the pressure inside the mixing container is lower than a pressure which can be withstood by the mixing container.

Optionally, wherein the safety assembly comprises:
a safety channel communicated with the mixing cavity and having a vent communicated with the atmosphere; and
a sealing block provided within the safety channel, and configured to seal the safety channel and the vent and be removed from the vent when the pressure within the mixing container reaches a predetermined value.

Optionally, wherein the safety assembly further comprises:
an end cap covering an opening of the safety channel; and
a compression spring located between the sealing block and the end cap.
Optionally, wherein the supply module comprises:
   a carbon dioxide cylinder configured to contain carbon dioxide;
   a supply connector configured to detachably provide the carbon dioxide cylinder; the supply connector being communicated with the mixing connector, such that the carbon dioxide cylinder mounted on the supply connector supplies carbon dioxide to the mixing container;
   the sparkling water mixing assembly further comprises:
      a storage box having a first storage bin and a second storage bin, the mixing connector, the three-way valve and the supply connector being provided in the first storage bin side by side along a length direction thereof; the second storage bin being located directly below the supply connector, and the second storage bin being configured to accommodate the carbon dioxide cylinder.

Optionally, wherein the exhaust portion is communicated with the connection channel, and the connection channel extends from the first storage bin into the second storage bin.

According to a second aspect of the present application, the present application further provides a refrigerator comprising the sparkling water mixing assembly as provided in any of the above embodiments.

In the sparkling water mixing assembly and the refrigerator having the same according to the present application, the sparkling water mixing assembly includes a supply module, a mixing container and a mixing connector. The supply module is configured to supply carbon dioxide; the mixing container is configured to contain to-be-mixed liquid and has an opening. The mixing connector is configured to detachably provide the mixing container. The mixing connector has a mixing cavity, a pressure channel, and an accessing channel. The opening extends into the mixing cavity. The pressure channel is communicated with the mixing cavity and configured to adjust a pressure in the mixing cavity. The accessing channel is communicated with the mixing cavity and the supply module and configured to allow the mixing container to acquire the carbon dioxide. Thus, the mixing connector in the present embodiment has the pressure channel, and the pressure channel facilitates preparation of sparkling water with different concentrations and disassembly of the mixing container. The mixing connector increases universality of the mixing container, and after the mixing container is provided on the mixing connector, the abilities of adjusting the pressure and acquiring the carbon dioxide are realized.

The above and other objects, advantages and features of the present application will become more apparent to those skilled in the art from the following detailed description of specific embodiments thereof taken in conjunction with the accompanying drawings.

### BRIEF DESCRIPTION OF THE DRAWINGS

Some specific embodiments of the invention will be described in detail hereinafter by way of example and not by way of limitation with reference to the accompanying drawings. The same reference numerals identify the same or similar components or parts in the drawings. Those skilled in the art should appreciate that the drawings are not necessarily drawn to scale. In the drawings:
FIG. 1 is a schematic diagram of a refrigerator according to an embodiment of the present application;
FIG. 2 is a schematic diagram of a sparkling water mixing assembly according to an embodiment of the present application;
FIG. 3 is an exploded view of the sparkling water mixing assembly according to an embodiment of the present application;
FIG. 4 is a schematic diagram of connection of a supply assembly and a mixing assembly of the sparkling water mixing assembly according to an embodiment of the present application;
FIG. 5 is a top view of the connection of the supply assembly and the mixing assembly of the sparkling water mixing assembly according to an embodiment of the present application;
FIG. 6 is a top view of the mixing assembly of the sparkling water mixing assembly according to an embodiment of the present application;
FIG. 7 is a schematic diagram of the supply assembly of the sparkling water mixing assembly according to an embodiment of the present application;
FIG. 8 is an assembly view of the supply assembly and a pressure relief switch of the sparkling water mixing assembly according to an embodiment of the present application;
FIG. 9 is a schematic diagram of the pressure relief switch of the sparkling water mixing assembly according to an embodiment of the present application;
FIG. 10 is an exploded view of the pressure relief switch of the sparkling water mixing assembly according to an embodiment of the present application;
FIG. 11 is a sectional view of a mixing connector of the sparkling water mixing assembly according to an embodiment of the present application;
FIG. 12 is an exploded view of a pressure adjustment assembly of the sparkling water mixing assembly according to an embodiment of the present application; and
FIG. 13 is a sectional view of the pressure adjustment assembly of the sparkling water mixing assembly according to an embodiment of the present application.

### DETAILED DESCRIPTION

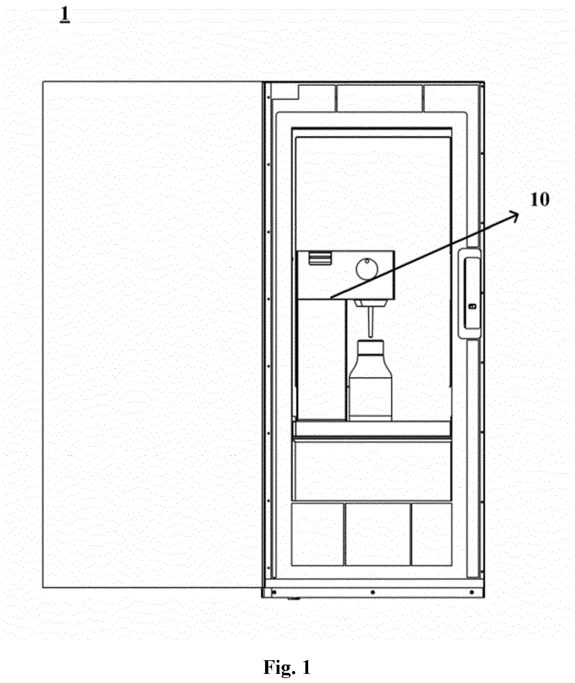

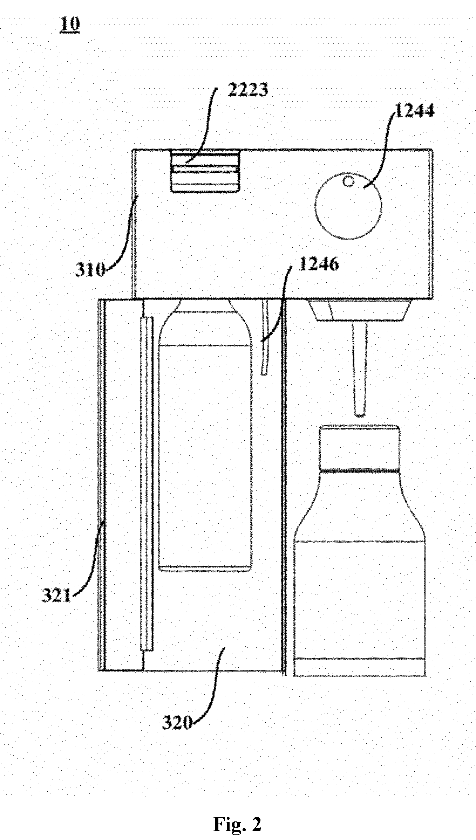

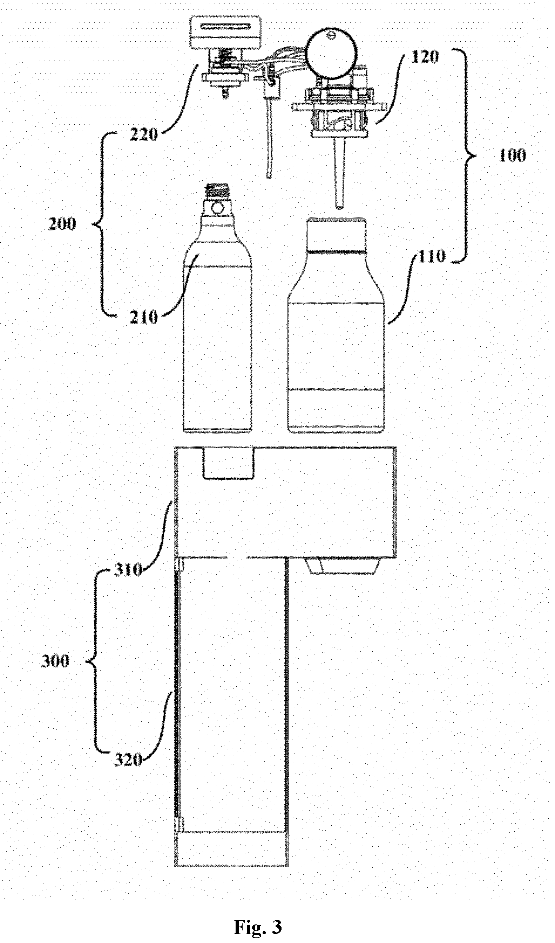

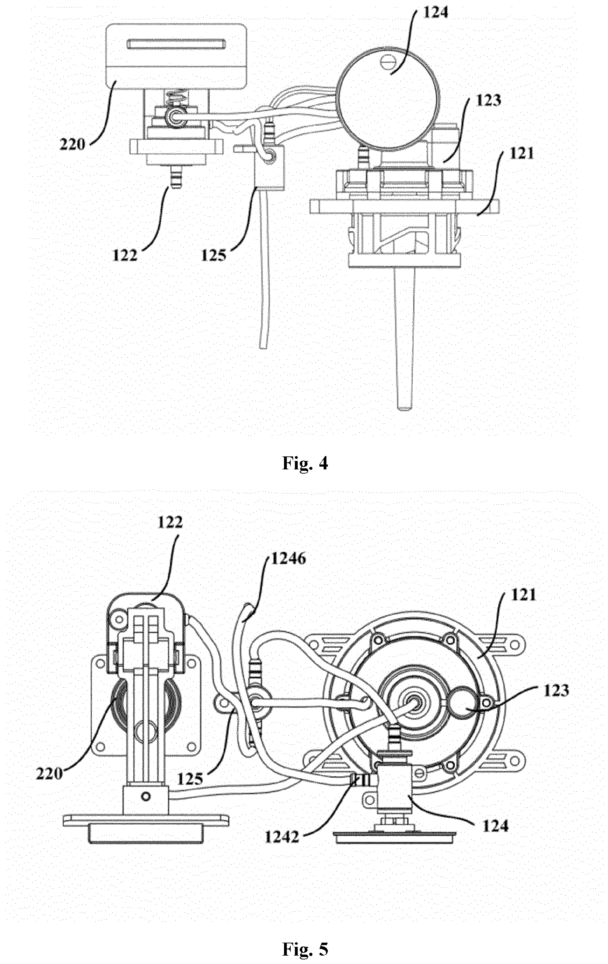

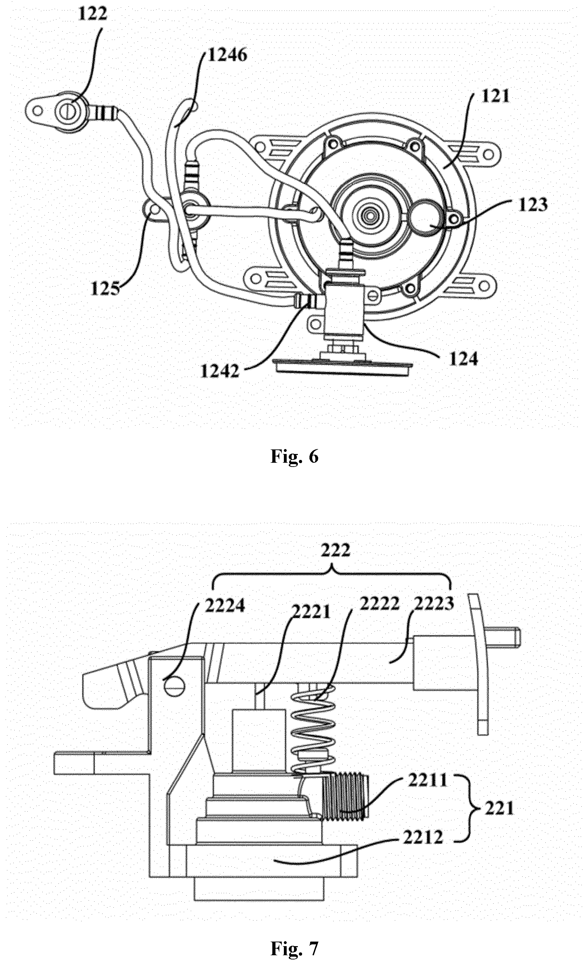

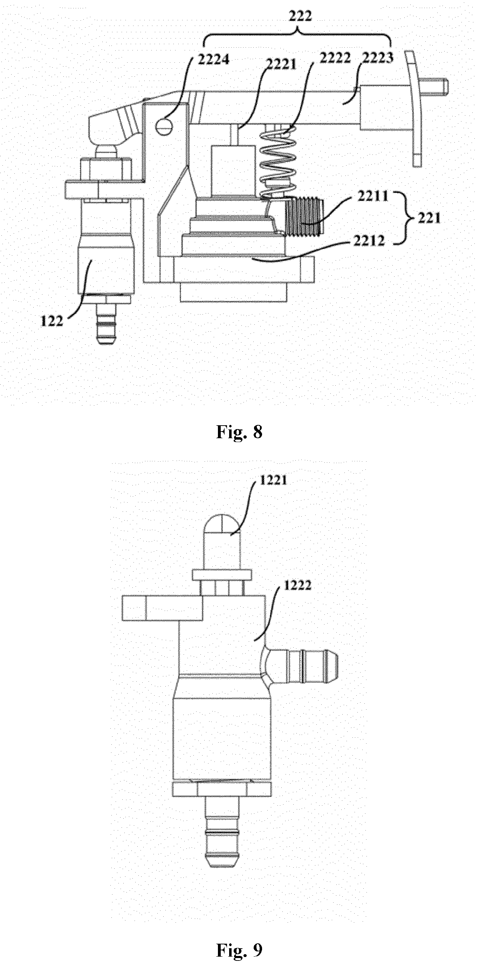

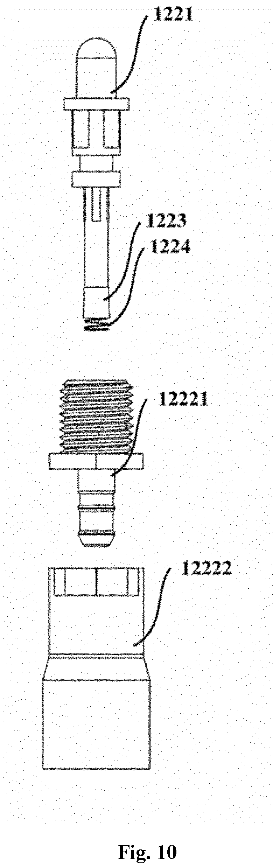

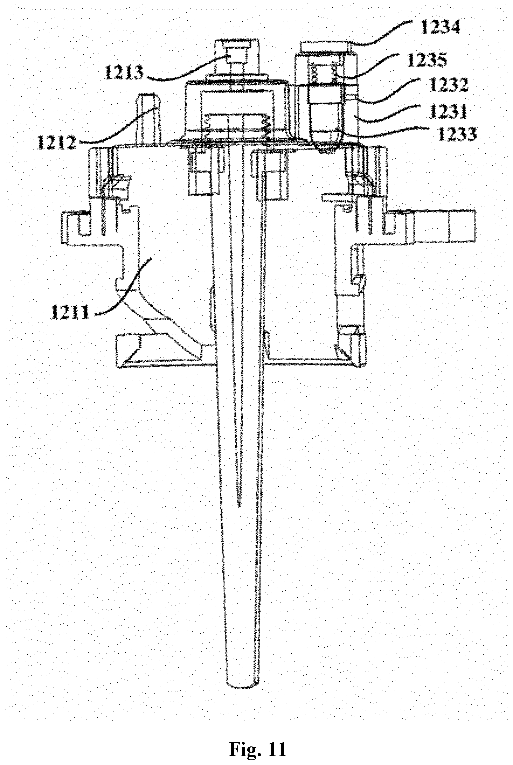

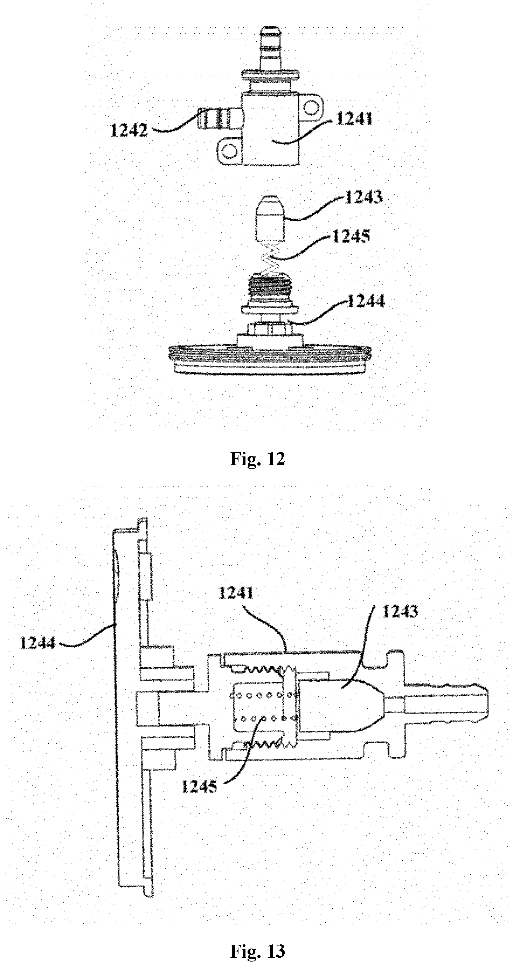

FIG. 1 is a schematic diagram of a refrigerator according to an embodiment of the present application; FIG. 2 is a schematic diagram of a sparkling water mixing assembly according to an embodiment of the present application; FIG. 3 is an exploded view of the sparkling water mixing assembly according to an embodiment of the present application; FIG. 4 is a schematic diagram of connection of a supply assembly and a mixing assembly in an embodiment of the present application; FIG. 5 is a top view of the connection of the supply assembly and the mixing assembly in an embodiment of the present application; FIG. 6 is a top view of the mixing assembly of the sparkling water mixing assembly according to an embodiment of the present application; FIG. 7 is a schematic diagram of the supply assembly of the sparkling water mixing assembly according to an embodiment of the present application; FIG. 8 is an assembly view of the supply assembly and a pressure relief switch of the sparkling water mixing assembly according to an embodiment of the present application; FIG. 9 is a schematic diagram of the pressure relief switch of the sparkling water mixing assembly according to an embodiment of the present application; FIG. 10 is an exploded view of the pressure relief switch of the sparkling water mixing assembly according to an embodiment of the present application; FIG. 11 is a sectional view of a mixing connector of the sparkling water mixing assembly according to an embodiment of the present application; FIG. 12 is an exploded view of a pressure adjustment assembly of the sparkling water mixing assembly according to an embodiment of the present application; and FIG. 13 is a sectional view of the pressure adjustment assembly of the sparkling water mixing assembly according to an embodiment of the present application.

FIG. 1 shows a view of assembly of a sparkling water mixing assembly 12010 in a refrigerator 1, and it is obvious that this assembly is merely exemplary and not exclusive.

As shown in FIGS. 2 and 3, in the present embodiment, the sparkling water mixing assembly 10 includes a mixing module 100, a supply module 200 and a storage box 300, the supply module 200 is configured to supply carbon dioxide, the mixing module 100 is configured to prepare sparkling liquid, and the storage box 300 is configured to accommodate the mixing module 100 and the supply module 200.

In some specific embodiments, the mixing module 100 includes a mixing container 110 and a mixing assembly 120, and the mixing container 110 is detachably provided on the mixing assembly 120. The mixing assembly 120 includes one or more combinations of a mixing connector 121, a pressure relief switch 122, a safety assembly 123, a pressure adjustment assembly 124, and a three-way valve 125. In some specific embodiments, the mixing connector 121 includes a mixing cavity 1211, a pressure channel 1212, and an accessing channel 1213. The pressure relief switch 122 includes a second ejector rod 1221, an exhaust pipe 1222, a blocking block 1223, and a pressure spring 1224. The safety assembly 123 includes a safety channel 1231, a vent 1232, a sealing block 1233, an end cap 1234, and a compression spring 1235. The pressure adjustment assembly 124 includes a connection channel 1241, an exhaust portion 1242, a pressing block 1243, a knob 1244, a spring 1245, and a connection channel 1246. It is obvious that not every embodiment includes the above-mentioned structures, and the above-mentioned structures can be combined to solve different technical problems.

In some specific embodiments, the supply module 200 includes a carbon dioxide cylinder 210 and a supply assembly 220, and the carbon dioxide cylinder 210 is detachably provided on the supply assembly 220. The supply assembly 220 includes one or more combinations of a supply connector 221 and a push switch 222. The supply connector 221 includes a supply channel 2211 and a gas cavity 2212, and the push switch 222 includes a first ejector rod 2221, a reset spring 2222, a lever 2223, and an interface portion 2224. It is obvious that not every embodiment includes the above-mentioned structures, and the above-mentioned structures can be combined to solve different technical problems.

FIGS. 4 and 5 show a schematic diagram of a connection relationship between the supply assembly 220 and the mixing assembly 120 in a working state, and it is apparent that the connection relationship is merely exemplary and not exclusive.

In a specific embodiment, the sparkling water mixing assembly 10 includes a mixing module 100 and a supply module 200, the mixing module 100 includes a mixing container 110 and a mixing assembly 120, and the mixing assembly 120 includes a mixing connector 121 and a pressure relief switch 122. The mixing container 110 is configured to contain to-be-mixed liquid, the mixing connector 121 is configured to detachably provide the mixing container 110, and the mixing connector 121 is fitted with the mixing container 110 to allow an interior of the mixing container 110 to be a closed space; the mixing connector 121 is also communicated with the supply module 200 to allow the mixing container 110 mounted on the mixing connector 121 to acquire carbon dioxide to prepare sparkling liquid; the pressure relief switch 122 is configured to be communicated with the mixing container 110, and when opened, communicate the mixing container 110 with an environment, so as to disassemble the mixing container 110 containing the sparkling liquid.

A shape, a type, or the like, of the mixing container 110 are not specifically limited, and in the present embodiment, a mixing bottle is used as the mixing container 110. The mixing container 110 contains the to-be-mixed liquid, the carbon dioxide is introduced into the mixing container 110, and the sparkling liquid is prepared inside the mixing container 110. The mixing container 110 has a certain anti-pressure capability to satisfy the requirement that the sparkling mixed liquid is prepared in the mixing container 110, and pressure resistance of the mixing container 110 is not particularly limited and designed according to specific working conditions. A specific type of the liquid is not limited, and may be, for example, purified water, fruit juice, or the like, and in the present embodiment, purified water. When the sparkling mixed liquid is prepared in the mixing container 110, a pressure inside the mixing container 110 is different from a pressure of the environment, and the mixing container 110 is difficult to disassemble.

A specific type, shape, configuration, or the like, of the mixing connector 121 are not limited, the mixing container 110 is detachably provided on the mixing connector 121, and the mixing connector 121 is fitted with the mixing container 110 to allow the interior of the mixing container 110 to form the closed space.

A specific type, shape, configuration, or the like, of the pressure relief switch 122 are not limited, and the pressure in the mixing container 110 may be equal to the pressure in the environment when the pressure relief switch 122 is opened. The pressure relief switch 122 is communicated with the mixing container 110, and after the sparkling water is prepared, the pressure relief switch 122 allows the pressure of the mixing container 110 to be equal to the environment pressure, and the mixing container 110 is easy to disassemble, such that the sparkling water mixing assembly 10 has numerous advantages. For example, different types of sparkling liquid can be prepared by the sparkling water mixing assembly 10; that is, sparkling water is prepared when purified water is contained in the mixing container 110, sparkling juice is prepared when juice is contained in the mixing container 110, and a user has a wider range of choices. The mixing container 110 is easy to clean, thus avoiding breeding of bacteria. Water stored in a water tank in the refrigerator 1 is prevented from being used by the mixing container 110, thus avoiding a sanitary problem caused when the water tank is not cleaned for a long time. The sparkling water mixing assembly 10 occupies a small volume.

The mixing connector 121 is configured to detachably provide the mixing container 110, and a specific detachable mode of the mixing container 110 is not limited, and may be, for example, screw connection or snap connection. A specific type of the supply module 200 is not limited, as long as the supply module 200 may provide a carbon dioxide source.

Thus, with the pressure relief switch 122, the mixing container 110 is easy to disassemble, such that the sparkling water mixing assembly 10 has numerous advantages. For example, different types of sparkling liquid can be prepared by the sparkling water mixing assembly 10, and the choices of the user are more flexible. The mixing container 110 is easy to clean, thus avoiding breeding of bacteria. The water stored in the water tank in the refrigerator 1 is prevented from being used by the mixing container 110, thus avoiding the sanitary problem caused when the water tank is not cleaned for a long time. The sparkling water mixing assembly 10 occupies a small volume.

In some other embodiments, as shown in FIGS. 3 to 7, the supply module 200 includes a carbon dioxide cylinder 210 and a supply connector 221, the supply connector 221 is configured to detachably provide the carbon dioxide cylinder 210; the supply connector 221 is communicated with the mixing connector 121, such that the carbon dioxide cylinder 210 mounted on the supply connector 221 supplies carbon dioxide to the mixing container 110. That is, in the present embodiment, the supply connector 221 is communicated with the mixing connector 121, and when the carbon dioxide cylinder 210 is detachably provided on the supply connector 221, the carbon dioxide cylinder 210 is communicated with the mixing container 110, and the carbon dioxide cylinder 210 can supply the carbon dioxide to the mixing container 110. The carbon dioxide cylinder 210 is easily disassembled and assembled by the arrangement and connection of the supply connector 221, thus avoiding that frequent replacement of pipeline connection is caused when the carbon dioxide cylinder 210 is replaced, and then causes problems of pipeline aging and sealing.

In some other embodiments, as shown in FIG. 7, the supply connector 221 has a push switch 222, and the push switch 222 is configured to control opening and closing of the carbon dioxide cylinder 210. The push switch 222 is provided on the connecting part, such that the carbon dioxide cylinder 210 has universality; that is, the carbon dioxide cylinder 210 is only required to be fitted with the supply connector 221, and the carbon dioxide cylinder 210 can be opened and closed under the control of the push switch 222 without configuring other devices. The supply connector 221 is inexpensive, and frequent control of the supply connector 221 results in failure of the supply connector 221 which is easily disassembled and replaced. Technical difficulty of replacement of the supply connector 221 is low.

In some other embodiments, as shown in FIGS. 7 and 8, the pressure relief switch 122 is closed when the push switch 222 is configured to open the carbon dioxide cylinder 210; the pressure relief switch 122 is opened when the push switch 222 is configured to close the carbon dioxide cylinder 210. The push switch 222 and the pressure relief switch 122 are linked in the present embodiment; that is, the push switch 222 can control the carbon dioxide cylinder 210 to be opened and the pressure relief switch 122 to be closed at the same time, and the push switch 222 can also control the carbon dioxide cylinder 210 to be closed and the pressure relief switch 122 to be opened at the same time. In a specific use process, the push switch 222 is configured to prepare the sparkling water, the user generally cannot forget to operate the push switch 222, but the user may forget to operate the pressure relief switch 122, which causes certain trouble for the user, and this arrangement can avoid too many keys. The pressure relief switch 122 is operated after the push switch 222 is operated, and when the user forgets operation steps, that is, the user opens the pressure relief switch 122 first, and then opens the push switch 222, the sparkling water cannot be prepared, the operation steps are more, and a lot of inconvenience is brought to the user due to the requirement of a certain order. In the present embodiment, this arrangement has many advantages, the user only opens the push switch 222, the pressure relief switch 122 can be automatically closed, and the sparkling water starts to be prepared; after the sparkling water is prepared, the user only closes the push switch 222, and the pressure relief switch 122 can be automatically opened, thereby facilitating the disassembly of the mixing container 110. Therefore, the linkage of the push switch 222 and the pressure relief switch 122 in the present embodiment makes the sparkling water mixing assembly 10 easy to operate, avoids errors, avoids too many keys and strict operation steps, and avoids causing certain trouble for the user.

In some other embodiments, as shown in FIGS. 3 to 8, the pressure relief switch 122 is communicated with the mixing connector 121, such that the mixing container 110 mounted on the mixing connector 121 is communicated with the pressure relief switch 122. The pressure relief switch 122 is communicated with the mixing connector 121, such that the mixing container 110 has universality; that is, the mixing container 110 is only required to be fitted with the mixing connector 121, and the mixing container 110 can relieve the pressure thereof under the control of the pressure relief switch 122 without configuring other devices.

Specifically, as shown in FIGS. 1 to 8, a cylinder opening of the carbon dioxide cylinder 210 is provided with a flip cap, and the flip cap is turned up and down relative to the carbon dioxide cylinder 210 to open or close the carbon dioxide cylinder 210. The supply connector 221 is configured to detachably provide the carbon dioxide cylinder 210, the supply connector 221 has a gas cavity 2212, a supply channel 2211, and a push switch 222, and the push switch 222 has a first ejector rod 2221. The cylinder opening extends into the gas cavity 2212 upwards; the supply channel 2211 is communicated with the gas cavity 2212, and the supply channel 2211 is configured to deliver carbon dioxide. The first ejector rod 2221 extends into an upper end of the flip cap through the gas cavity 2212, and moves up and down relative to the flip cap to open or close the carbon dioxide cylinder 210, such that the supply channel 2211 delivers the carbon dioxide outwards or stops delivering the carbon dioxide.

A size of the carbon dioxide cylinder 210 is not limited, and a position of the cylinder opening thereof is also not limited; for example, in the present embodiment, the cylinder opening is located at a top of the carbon dioxide cylinder 210. A size of the flip cap is not limited, as long as the flip cap can be turned up and down relative to the carbon dioxide cylinder 210 to open and close the carbon dioxide cylinder 210.

The supply connector 221 is configured to detachably provide the carbon dioxide cylinder 210, and a specific detachment mode is not limited, and may be, for example, snap connection or thread fit. A connection position of the supply connector 221 and the carbon dioxide cylinder 210 is not limited; for example, in the present embodiment, an external thread is formed at the cylinder opening of the carbon dioxide cylinder 210, the gas cavity 2212 has an opening, an internal thread is formed at the opening on a side wall of the gas cavity 2212, and after connection and fit of the thread of the cylinder opening, the cylinder opening naturally extends upwards into the gas cavity 2212.

A shape, a size, or the like, of the gas cavity 2212 are not particularly limited, and the gas cavity 2212 is closed except for the channels formed therein. The supply channel 2211 is communicated with the gas cavity 2212, the supply channel 2211 is configured to deliver the carbon dioxide, and a specific type and a providing position of the supply channel 2211 are not limited, as long as the supply channel can be configured to delivery the carbon dioxide outwards.

As shown in FIG. 8, a specific mode in which the first ejector rod 2221 passes through the gas cavity 2212 is not limited; for example, in the present embodiment, a cylinder with a shape matched with a shape of the first ejector rod 2221 is formed at a top of the gas cavity 2212, the first ejector rod 2221 extends into the gas cavity 2212 through the cylinder, and tightness of the gas cavity 2212 can be ensured after the first ejector rod 2221 extends into the gas cavity 2212. The first ejector rod 2221 extends into the upper end of the flip cap through the gas cavity 2212, the first ejector rod 2221 is pressed, the flip cap is pressed downwards by the first ejector rod 2221, and the carbon dioxide cylinder 210 is opened; when the pressing of the first ejector rod 2221 is stopped, the pressure in the carbon dioxide cylinder 210 pushes the flip cap to move upwards, so as to close the carbon dioxide cylinder 210. A specific shape of the first ejector rod 2221 is not limited, as long as the first ejector rod can move up and down relative to the flip cap to open or close the carbon dioxide cylinder 210.

Therefore, the sparkling water mixing assembly 10 according to the present embodiment has a simple structure and is easy to assemble and operate. The supply connector 221 allows easy replacement of the carbon dioxide cylinder 210, such that the carbon dioxide cylinder 210 can be replaced without disassembling excessive connection channellines.

Specifically, as shown in FIGS. 7 to 8, the push switch 222 further has an interface portion and a lever 2223, and the interface portion 2224 is located on the first ejector rod 2221.

The lever 2223 is hinged at the interface portion 2224, the lever 2223 is located on the first ejector rod 2221, and the lever 2223 is rotated to open or close the carbon dioxide cylinder 210. The push switch 222 also has the interface portion and the lever 2223, and a providing position of the push switch 222 can be changed.

Specifically, as shown in FIG. 8, the pressure relief switch 122, the interface portion 2224, and the gas cavity 2212 are provided in sequence along an extension direction of the lever 2223; the first ejector rod 2221 is located directly below a first end of the lever 2223, and the pressure relief switch 122 is located directly below a second end of the lever 2223. With the arrangement mode, a space is saved and a structure is compact.

Specifically, as shown in FIGS. 9 to 10, the pressure relief switch 122 includes a second ejector rod 1221, an exhaust pipe 1222, a blocking block 1223, and a pressure spring 1224. The second ejector rod 1221 is located directly below the second end. A lower end of the second ejector rod 1221 is sleeved with the exhaust pipe 1222, and the exhaust pipe 1222 has a blocking section gradually widening downwards and configured to be communicated with the mixing container 110 and the environment. The blocking block 1223 is provided in the blocking section of the exhaust pipe 1222, and the blocking block 1223 gradually widens downwards. The pressure spring 1224 is provided between a bottom of the blocking section and the blocking block 1223; when the first end of the lever 2223 is pressed downwards, pressing of the second ejector rod 1221 by the second end of the lever 2223 is eliminated, the blocking block 1223 moves upwards under an elastic force of the pressure spring 1224, and the pressure relief switch 122 stops communication with the environment; when the lever 2223 is reset, the second end of the lever 2223 presses the upper end of the second ejector rod 1221, the blocking block 1223 moves downwards, and the pressure relief switch 122 is communicated with the environment.

In the present embodiment, the second ejector rod 1221 is located directly below the second end, which facilitates the second end of the first ejector rod 2221 to apply a downward pressure to the second ejector rod to control the opening and closing of the pressure relief switch 122. Specifically, a lower end and a side surface (the side surface refers to a side surface of an upper end of the blocking section) of the exhaust pipe 1222 are communicated with the environment and the mixing container 110 respectively; that is, the lower end of the exhaust pipe 1222 is communicated with the environment, the side surface of the exhaust pipe 1222 is communicated with the mixing container 110, and the mixing container 110 is communicated with the environment through the exhaust pipe 1222. In the present embodiment, the exhaust pipe 1222 has the blocking section gradually widening downwards, the blocking block 1223 gradually widens downwards, the pressure spring 1224 is provided between the bottom of the blocking section and the blocking block 1223, the first end of the lever 2223 is pressed, the first ejector rod 2221 moves downwards, the carbon dioxide container is opened, and preparation of the sparkling water is started; the second end of the lever 2223 no longer applies the pressure to the second ejector rod 1221, the pressure spring 1224 supports the blocking block 1223 to move upwards, and since the blocking block 1223 has a wider bottom, the blocking block 1223 blocks the blocking section to prevent the mixing container 110 from being communicated with the environment, and the pressure relief switch 122 is closed. The pressing of the first end of the lever 2223 is stopped, the lever 2223 is reset, the second end of the lever 2223 applies the pressure to the second ejector rod 1221, the second ejector rod 1221 pushes the pressing block 1243 to move downwards, and since the blocking section has a wider bottom, the blocking section is not blocked, and the mixing container 110 is communicated with the environment. It is apparent that a specific shape and arrangement of the components included by the pressure relief switch 122 in the present embodiment are exemplary only and not exclusive. With this arrangement, the sparkling water mixing assembly 10 saves the space and has a compact structure; the linkage of the push switch 222 and the pressure relief switch 122 in the present embodiment makes the sparkling water mixing assembly 10 easy to operate, avoids errors, avoids too many keys and strict operation steps, and avoids causing certain trouble for the user. Moreover, from the following embodiments, the pressure relief switch 122 is provided right in a storage bin of the carbon dioxide cylinder 210, so as to prevent the gas from being directly discharged to the user.

Specifically, as shown in FIG. 10, the exhaust pipe 1222 includes an inner sleeve 12221 and an outer sleeve 12222, and the inner sleeve 12221 has an external thread to form the blocking section; the outer sleeve 12222 has an internal thread, and the inner sleeve 12221 is sleeved with the outer sleeve by threaded connection. With this arrangement of the exhaust pipe 1222, the exhaust pipe 1222 is easy to disassemble, assemble and replace.

Specifically, as shown in FIG. 8, an extension direction of the supply channel 2211 coincides with an extension direction of the first end, the supply channel 2211 is located directly below the first end, the supply connector 221 further includes a reset spring 2222, and the reset spring 2222 is provided between the first end and the supply channel 2211 and configured to reset the lever 2223 by removing an external force. It is apparent that the mode in which the reset spring 2222 resets the lever 2223 is exemplary only and not exclusive, and for example, a heavy second end of the lever 2223 also resets the lever 2223, and with this arrangement, the sparkling water mixing assembly 10 saves the space and has a compact structure.

Specifically, as shown in FIGS. 2 to 11, the sparkling water mixing assembly 10 includes a supply module 200 and a mixing container 110, and the supply module 200 is configured to supply carbon dioxide. The mixing container 110 is configured to contain to-be-mixed liquid, and the mixing container 110 has an opening. A mixing connector 121 is configured to detachably provide the mixing container 110, and the mixing connector 121 has a mixing cavity 1211, a pressure channel 1212 and an accessing channel 1213. The opening extends into the mixing cavity 1211; the pressure channel 1212 is communicated with the mixing cavity 1211 and configured to regulate a pressure within the mixing cavity 1211; the accessing channel 1213 is communicated with the mixing cavity 1211 and the supply module 200, and configured to allow the mixing container 110 to acquire the carbon dioxide.

As shown in FIG. 11, a specific shape of the mixing container 110 is not limited, and in the present embodiment, the mixing container 110 has a bottle shape, and the opening is located above the bottle. A shape, a size, or the like, of the mixing cavity 1211 of the mixing container 110 are not particularly limited. A specific mode in which the mixing container 110 is detachably provided on the mixing connector 121 is not limited, and in the present embodiment, the mixing container 110 is snapped to the mixing connector 121 by a bottle wall at the opening thereof, and the opening naturally extends into the mixing cavity 1211. The pressure channel 1212 and the accessing channel 1213 of the mixing container 110 are also not particularly limited. The pressure channel 1212 is configured to adjust the pressure in the mixing cavity 1211, and in the present embodiment, the pressure channel 1212 is configured as a channel for adjusting the pressure in the mixing container 110 during a preparation stage and a pressure relief stage.

Therefore, the mixing connector 121 in the present embodiment has the pressure channel 1212, and the pressure channel 1212 can adjust the pressure in the mixing container 110 in the preparation stage and the pressure relief stage, which facilitates the preparation of the sparkling water with different concentrations and meanwhile facilitates disassembly of the mixing container 110. The mixing connector 121 has the pressure channel 1212, the accessing channel 1213 and other structures, the mixing container 110 is detachably provided on the mixing connector to increase universality of the mixing container 110, and after the mixing container 110 is provided on the connecting part, the abilities of adjusting the pressure and acquiring the carbon dioxide are realized. The mixing container 110 is relatively easy to replace and disassemble, and complex pipeline connection is omitted.

Specifically, as shown in FIGS. 4 to 6 and 11, the mixing assembly 120 further includes a three-way valve 125, a pressure relief switch 122, and a pressure adjustment assembly 124. A first port of the three-way valve 125 is communicated with the pressure channel 1212; the pressure relief switch 122 is communicated with a second port of the three-way valve 125, such that the mixing container 110 mounted on the mixing connector 121 is communicated with the pressure relief switch 122, and when the pressure relief switch is opened, the mixing container 110 is communicated with the environment to facilitate disassembly of the mixing container 110. The pressure adjustment assembly 124 is communicated with a third port of the three-way valve 125, such that the mixing container 110 mounted on the mixing connector 121 is communicated with the pressure adjustment assembly 124 for adjusting the pressure within the mixing container 110.

In the present embodiment, the three-way valve 125 communicates the pressure relief switch 122 and the pressure adjustment assembly 124 with the mixing container 110, the three-way valve 125 reduces communication portions communicated with the mixing cavity 1211 and formed in the mixing connector 121, and the three-way valve 125 increases functions of the mixing connector 121; for example, the mixing connector 121 is already set and cannot be additionally provided with other communication portions, but a plurality of other functional assemblies communicated with the mixing connector 121 can be added through the three-way valve 125.

In some other embodiments, as shown in FIG. 11, the sparkling water mixing assembly 10 further includes a safety assembly 123, and the safety assembly 123 is communicated with the mixing connector 121, such that the mixing container 110 mounted on the mixing connector 121 is communicated with the safety assembly 123 to ensure that the pressure inside the mixing container 110 is lower than a pressure which can be withstood by the mixing container 110. The safety assembly 123 is communicated with the mixing container 110, and when the pressure inside the mixing container 110 is greater than the pressure which can be withstood by the mixing container 110, the safety assembly 123 is opened, and gas inside the mixing container 110 is discharged through the safety assembly 123, so as to prevent the mixing container 110 from being burst. A specific structure, type, shape, or the like, of the safety assembly 123 are not limited.

Optionally, as shown in FIG. 11, the safety assembly 123 includes a safety channel 1231 and a sealing block 1233, the safety channel 1231 is communicated with the mixing cavity 1211, and the safety channel 1231 has a vent 1232 communicated with the atmosphere; the sealing block 1233 is provided within the safety channel 1231, and the sealing block 1233 is configured to seal the safety channel 1231 and the vent 1232 and be removed from the vent 1232 when the pressure within the mixing container 110 reaches a predetermined value. The safety assembly 123 has a simple structure and is compact, and the safety assembly 123 is communicated with the mixing container 110, such that the mixing container 110 has universality; that is, the mixing container 110 is only required to be fitted with the mixing connector 121, and safety of the mixing container 110 can be guaranteed under control of the safety assembly 123 without providing other devices on the mixing container 110.

Optionally, as shown in FIG. 11, the safety assembly 123 further includes an end cap 1234 and a compression spring 1235, and the end cap 1234 covers an opening of the safety channel 1231; the compression spring 1235 is located between the sealing block 1233 and the end cap 1234. The compression spring 1235 is configured to adjust a pressure on the sealing block 1233 and thus a pressure on the mixing container 110, so as to meet requirements of different mixing containers 110.

Optionally, as shown in FIG. 12, the sparkling water mixing assembly 10 further includes a pressure adjustment assembly 124, and the pressure adjustment assembly 124 is communicated with the mixing connector 121, such that the mixing container 110 mounted on the mixing connector 121 is communicated with the pressure adjustment assembly 124 for adjusting the pressure inside the mixing container 110. The pressure adjustment assembly 124 is communicated with the mixing container 110, and the pressure adjustment assembly 124 sets the mixing pressure within the mixing container 110, beyond which gas in the mixing container 110 is discharged outwards through the pressure adjustment assembly 124 to guarantee the mixing pressure within the mixing container 110. The pressure adjustment assembly 124 allows the pressure within the mixing container 110 to be adjusted, such that the mixing container 110 prepares the sparkling water at different pressures. The pressure adjustment assembly 124 is communicated with the mixing connector 121, such that the mixing container 110 has universality; that is, the mixing container 110 is only required to be fitted with the mixing connector 121, and the mixing container 110 can prepare the sparkling water under different pressures under control of the pressure adjustment assembly 124 without configuring other devices. A specific configuration, shape, or the like, of the pressure adjustment assembly are not limited.

Optionally, as shown in FIG. 11, the pressure adjustment assembly 124 includes a connection channel 1241 and a pressing block 1243, a first end of the connection channel 1241 is communicated with the third port of the three-way valve 125, and a side wall thereof has an exhaust portion 1242 communicated with the atmosphere; the pressing block 1243 is located in the connection channel 1241 and configured to block the exhaust portion 1242 and the first end of the connection channel 1241, and a pressure of the pressing block 1243 can be adjusted to adjust the pressure in the mixing container 110. A specific shape of the connection channel 1241 is not limited.

In the present embodiment, the connection channel 1241 is cylindrical, and one end of the connection channel 1241 is tapered. A shape of the pressing block 1243 is not limited specifically, and matched with the shape of the connection channel 1241, the pressing block 1243 is also tapered, and an outer surface of the pressing block 1243 is attached to an inner surface of one end of the connection channel 1241 to block the exhaust portion 1242 and the first end of the connection channel 1241. The pressure of the pressing block 1243 may be adjusted to adjust the pressure in the mixing container 110 to prepare the sparkling water at different pressures.

Optionally, a second end of the connection channel 1241 has an internal thread; the pressure adjustment assembly 124 further includes a knob 1244 and a spring 1245. The knob 1244 has an external thread, the knob 1244 is configured to be sleeved with the second end of the connection channel 1241, and the knob 1244 is in threaded fit with the second end of the connection channel 1241. The spring 1245 is provided between the knob 1244 and the pressing block 1243, and the knob 1244 is configured to be rotated to apply different pressures to the pressing block 1243. When the knob 1244 is rotated, the spring 1245 is pressed differently, the spring 1245 deforms differently, the pressing block 1243 is pressed differently, and the mixing pressure in the mixing container 110 is also different. With this structure of the pressure adjustment assembly 124, the pressure within the mixing container 110 can be more precisely and simply adjusted.

In some other embodiments, as shown in FIGS. 1 to 3, the sparkling water mixing assembly 10 further includes a storage box 300, the storage box 300 has a first storage bin 310 and a second storage bin 320, and the mixing connector 121 and the supply connector 221 are provided in the first storage bin 310 side by side along a length direction thereof, and extend out from a bottom of the first storage bin 310; the second storage bin 320 is located directly below the supply connector 221, and the second storage bin 320 is configured to accommodate the carbon dioxide cylinder 210. The carbon dioxide cylinder 210 is detachably connected with the supply connector 221 through the bottom of the first storage bin 310; the mixing container 110 is detachably connected with the mixing connector 121 through the bottom of the first storage bin 310.

Shapes of the first storage bin 310 and the second storage bin 320 are not particularly limited, and in the present embodiment, each of the first storage bin 310 and the second storage bin 320 has a rectangular parallelepiped shape. The first storage bin 310 is horizontally provided, the second storage bin 320 is vertically provided, the second storage bin 320 is located directly below the first storage bin 310, and the second storage bin 320 is located on one side of the first storage bin 310. Since the carbon dioxide cylinder 210, the mixing connector 121, the supply connector 221, or the like, are not frequently replaced, the first storage bin 310 and the second storage bin 320 are configured to accommodate these assemblies to make the entire structure more beautiful. The second storage bin 320 is located directly below the first storage bin 310, such that the pressure relief switch 122 can directly discharge carbon dioxide towards the second storage bin 320, thereby preventing direct discharge to the user.

The safety assembly 123, the pressure relief switch 122, the pressure adjustment assembly 124 and the push switch 222 are all provided in the first storage bin 310; the second storage bin 320 has a door 321 for taking and placing the carbon dioxide cylinder 210, and the push switch 222 and the pressure adjustment assembly 124 extend side by side from the first storage bin 310 to the door 321. In the present embodiment, the knob 1244 of the pressure adjustment assembly 124 and the lever 2223 of the push switch 222 both extend side by side from the door 321. The door 321, the push switch 222 and the pressure adjustment assembly 124 all extend out from the same direction to facilitate operations of the user. In the present embodiment, the door 321, the first end of the lever 2223, and the knob 1244 all extend out from the same direction to facilitate the operations of the user.

The exhaust portion 1242 is communicated with the connection channel 1246, and the connection channel 1246 extends from the first storage bin 310 into the second storage bin 320. A specific shape of the exhaust portion 1242 is not limited, and is cylindrical in the present embodiment. The exhaust portion 1242 of the pressure adjustment assembly 124 and a pressure relief assembly are both configured as assemblies facilitating exhausting, and therefore, the exhaust portion and the pressure relief assembly are guided into the second storage bin 320, such that the pressure relief switch 122 and the pressure adjustment assembly 124 can directly discharge carbon dioxide towards the second storage bin 320, thereby preventing direct discharge to the user.

According to a second aspect of the present application, the present application further provides a refrigerator 1 including the sparkling water mixing assembly 10 according to any one of the above embodiments.

In the description of the present embodiment, reference terms like "an embodiment," "some embodiments," "an illustrative embodiment," "an example," "a specific example," or "some examples" mean that a particular feature, structure, material, or characteristic described in connection with the embodiment or example is included in at least one embodiment or example of the invention. In this document, such indicative expressions of the aforementioned terms do not necessarily refer to the same embodiment or example. Moreover, the described specific features, structures, materials, or characteristics may be combined in any suitable manner in one or more embodiments or examples.

In the description of the present embodiment, it should be understood that terms like "center," "longitudinal," "lateral," "length," "upper," "lower," "front," "rear," "vertical," "top," "bottom," "inside," "outside,"and other directional or positional references are based on the orientations or positional relationships shown in the drawings. They are used solely for the convenience of describing the invention and simplifying the description, and do not imply that the devices or components referred to must have a specific orientation, be constructed and operated in a specific orientation, and thus should not be construed as limiting the invention.

The terms "first" and "second" are used for descriptive purposes only and are not to be understood as indicating or implying relative importance or implicitly specifying the number of technical features indicated. Thus, a feature defined with the terms "first", "second" may expressly or implicitly include at least one such feature, i.e. one or more such features. In the description of the present application, "plurality" means at least two, e.g., two, three, etc., unless otherwise expressly and specifically limited. When a feature "includes or comprises" one or more of the features covered by it, this indicates that other features are not excluded and that other features may be further included, unless otherwise specifically described.

Unless explicitly defined and limited, terms such as "mounted," "connected," "coupled," "fixed," and "interconnected" should be broadly understood. For example, they can represent fixed connections, removable connections, or integrally formed connections; they can be mechanical connections or electrical connections; they can be direct connections or indirect connections through intermediaries; and they can represent internal communications within a component or the interaction between components, unless explicitly limited otherwise. Persons skilled in the art should understand the specific meanings of these terms in the context of the invention according to the specific circumstances.

Furthermore, in the description of this embodiment, the first feature being "above" or "below" the second feature may include the first and second features being in direct contact, or it may include the first and second features not being in direct contact, but rather being in contact through another feature between them. That is, in the description of this embodiment, the first feature being "above", "above" and "on top of" the second feature includes the first feature being directly above and diagonally above the second feature, or merely It means that the first feature is horizontally higher than the second feature. The first feature being "under", "below", or "beneath" the second feature may be that the first feature is directly below or diagonally below the second feature, or simply that the first feature is horizontally higher than the second feature, less than the second feature.

Thus far, persons skilled in the art should recognize that although numerous illustrative embodiments of the invention have been shown and described in detail, many other variations or modifications consistent with the principles of the invention can be directly determined or derived from the content disclosed by the invention without departing from the spirit and scope of the invention. Therefore, the scope of the invention should be understood and recognized as covering all these other variations or modifications.

## Claims

1. A sparkling water mixing assembly, comprising:
a supply module configured to supply carbon dioxide;
a mixing container configured to contain to-be-mixed liquid and having an opening; and
a mixing connector configured to detachably provide the mixing container, wherein the mixing connector comprises:
a mixing cavity, the opening extending into the mixing cavity;
a pressure channel communicated with the mixing cavity and configured to adjust a pressure in the mixing cavity; and
an accessing channel communicated with the mixing cavity and the supply module and configured to allow the mixing container to acquire the carbon dioxide.

2. The sparkling water mixing assembly according to claim 1, further comprising:
a three-way valve having a first port communicated with the pressure channel;
a pressure relief switch communicated with a second port of the three-way valve, such that the mixing container mounted on the mixing connector is communicated with the pressure relief switch, and when the pressure relief switch is opened, the mixing container is communicated with the environment to facilitate disassembly of the mixing container;
a pressure adjustment assembly communicated with a third port of the three-way valve, such that the mixing container mounted on the mixing connector is communicated with the pressure adjustment assembly for adjusting the pressure within the mixing container.

3. The sparkling water mixing assembly according to claim 2,
wherein the pressure adjustment assembly comprises:
a connection channel providing a first end communicated with the third port of the three-way valve, and a side wall having an exhaust portion communicated with the atmosphere; and
a pressing block located in one end of the connection channel and configured to block the exhaust portion and a first end of the connection channel, a pressure of the pressing block being adjustable to adjust the pressure in the mixing container.

4. The sparkling water mixing assembly according to claim 3,
wherein a second end of the connection channel has an internal thread;
the pressure adjustment assembly further comprises:
a knob having an external thread and configured to be sleeved with the second end of the connection channel and be in threaded fit with the second end of the connection channel; and
a spring provided between the knob and the pressing block, the knob being configured to be rotated to apply different pressures to the pressing block.

5. The sparkling water mixing assembly according to any one of claims 1 to 4, further comprising:
a safety assembly communicated with the mixing cavity, such that the mixing container mounted on the mixing connector is communicated with the safety assembly to ensure that the pressure inside the mixing container is lower than a pressure which can be withstood by the mixing container.

6. The sparkling water mixing assembly according to claim 5, wherein the safety assembly comprises:
a safety channel communicated with the mixing cavity and having a vent communicated with the atmosphere; and
a sealing block provided within the safety channel, and configured to seal the safety channel and the vent and be removed from the vent when the pressure within the mixing container reaches a predetermined value.

7. The sparkling water mixing assembly according to claim 6, wherein the safety assembly further comprises:
an end cap covering an opening of the safety channel; and
a compression spring located between the sealing block and the end cap.

8. The sparkling water mixing assembly according to claim 3 or 4,
wherein the supply module comprises:
a carbon dioxide cylinder configured to contain carbon dioxide;
a supply connector configured to detachably provide the carbon dioxide cylinder; the supply connector being communicated with the mixing connector, such that the carbon dioxide cylinder mounted on the supply connector supplies carbon dioxide to the mixing container;
the sparkling water mixing assembly further comprises:
a storage box having a first storage bin and a second storage bin, the mixing connector, the three-way valve and the supply connector being provided in the first storage bin side by side along a length direction thereof; the second storage bin being located directly below the supply connector, and the second storage bin being configured to accommodate the carbon dioxide cylinder.

9. The sparkling water mixing assembly according to claim 8,
wherein the exhaust portion is communicated with the connection channel, and the connection channel extends from the first storage bin into the second storage bin.

10. A refrigerator, comprising the sparkling water mixing assembly according to any one of claims 1 to 9.
